# EUROPEAN PATENT APPLICATION

(11) **EP 4 716 197 A1**
(43) Date of publication of application: **25.03.2026**
(21) Application number: 24825181.1
(22) Date of filing: 13.06.2024
(51) Int. Cl.: H04L 69/24

(54) **INFORMATION TRANSMISSION METHOD AND RELATED DEVICE**

(30) Priority: 20.06.2023 CN 202310740806
(71) Applicant: Huawei Technologies Co., Ltd., Shenzhen, Guangdong 518129 (CN)
(72) Inventor: SHANG, Delong, Nanjing, Jiangsu 211100 (CN); WANG, Kanwen, Shenzhen, Guangdong 518129 (CN); OUYANG, Weilong, Shenzhen, Guangdong 518129 (CN); TAO, Minghui, Shenzhen, Guangdong 518129 (CN); LIAO, Jianxing, Shenzhen, Guangdong 518129 (CN)
(74) Representative: Thun, Clemens
(86) International application number: PCT/CN2024/098915
(87) International publication number: WO 2024/260285

(57) **Abstract**

Disclosed are an information transmission method and a related device. The information transmission method includes: A first node receives first data or a first data signal, where the first data signal is obtained by encoding a first flit, and the first flit is obtained by decomposing the first data; and the first node sends the first data signal to a second node based on a preset time interval, where the preset time interval is determined based on a transmission distance between the first node and the second node. A sending rate is controlled by configuring an interval for periodically sending data, to ensure that a receive end can effectively process data within the time. In addition, a feedback signal that increases a transmission delay is omitted in asynchronous clockless communication. In this way, a transmission delay is reduced and a system throughput rate is increased.

## Description

This application claims priority to Chinese Patent Application No. 202310740806.3, filed with the China National Intellectual Property Administration on June 20, 2023 and entitled "INFORMATION TRANSMISSION METHOD AND RELATED DEVICE", which is incorporated herein by reference in its entirety.

### TECHNICAL FIELD

Embodiments of this application relate to the communication field, and in particular, to an information transmission method and a related device.

### BACKGROUND

With the booming development of a system on chip (system-on-chip, SoC), a chip keeps increasing in scale.

To improve inter-chip and intra-chip communication efficiency, a communication delay needs to be reduced. Due to slowdown in updating a chip manufacturing process, performance of an existing synchronous circuit design is close to a limit bottleneck. Therefore, currently, an asynchronous clockless circuit design manner is used, and accuracy of transmission is determined by using a feedback signal. With removal of a limitation from a global clock, a delay can be effectively reduced, and dynamic power consumption can be reduced.

However, in the current asynchronous clockless circuit design, a control flow is not flexible and reliable enough, data is not sent in some time periods in which data can be sent, and the feedback signal also occupies communication time. As a result, there is still a problem that a transmission delay is long.

### SUMMARY

Embodiments of this application provide an information transmission method, to flexibly control chip communication and reduce a data transmission delay. Embodiments of this application further provide a corresponding communication node, a communication device, a communication system, a computer-readable storage medium, a computer program product, and the like.

A first aspect of this application provides an information transmission method. The method includes: A first node receives input data, where the input data is first data or a first data signal, the first data signal is obtained by encoding a first flit, and the first flit is obtained by decomposing the first data; and the first node sends the first data signal to a second node based on a preset time interval, where the preset time interval is determined based on a transmission distance between the first node and the second node.

In this application, the information transmission method is applied to two nodes. The two nodes may be nodes in a same system, or may be nodes in different systems. Both the two nodes include a transmit module and a receive module, and have same functions. An asynchronous multi-rail transmission protocol and a full-duplex communication mode are used between the two nodes. That is, the two nodes independently transmit data bidirectionally.

In this application, the first data is a data packet sent by a synchronization node, and input data received by a first transmit module of the first node may be the first data, or may be the first data signal.

In this application, the transmission distance between the first node and the second node may also be understood as actual line length information in a circuit design. After the preset time interval is set, it can be ensured that in a normal case, when the first node sends the first data signal at the preset time interval, the second node can exactly complete processing of a previous first data signal, and start to process a new first data signal after receiving the new first data signal.

According to the first aspect, the first node receives the first data or the first data signal, where the first data signal is obtained by encoding the first flit, and the first flit is obtained by decomposing the first data; and the first node sends the first data signal to the second node based on the preset time interval, where the preset time interval is determined based on the transmission distance between the first node and the second node. A sending rate is controlled by configuring an interval for periodically sending data, to ensure that a receive end can effectively process data within the time. In addition, a feedback signal that increases a transmission delay is omitted in asynchronous clockless communication. In this way, a transmission delay is reduced and a system throughput rate is increased.

In a possible implementation of the first aspect, the method further includes: The first node sends first control information to the second node based on the preset time interval, where a sending priority of the first control information is higher than that of the first data signal.

In this possible implementation, the first node further sends the control information to the second node, to support a control requirement in a data transmission process. Because the first control information usually carries important control flow information, the sending priority of the first control information is higher than that of the first data signal.

In a possible implementation of the first aspect, the first control information includes at least one of a first repetition code, a first flow control code, a first parity check code, and a first mode code, where the first repetition code indicates that a plurality of first data signals with same content are consecutively sent; the first flow control code indicates whether the first node is allowed to receive a new data signal; the first parity check code indicates that sending of the first data is completed; and the first mode code is used to control switching of an operating mode of the first node.

In this possible implementation, the asynchronous multi-rail transmission protocol used in the information transmission method uses a 2-of-7 code (seven transmission lines are used to represent 4-bit data, and a maximum of two 1s is included in the code). When the first flit is encoded, 16 combinations are used to represent 4-bit data information, and remaining five combinations are used to represent the first control information. Another function of the feedback signal is further implemented by adding encoding of the control information, to improve flexibility and reliability of data transmission.

In a possible implementation of the first aspect, the method further includes: The first node receives a second data signal sent by the second node, where the second data signal is obtained by encoding a second flit, and the second flit is obtained by decomposing second data; and the first node outputs the second data signal.

In this possible implementation, in addition to sending the first data signal to the second node, the first node also receives the second data signal sent by the second node, to implement bidirectional communication, thereby improving implementability of the solution.

In a possible implementation of the first aspect, the method further includes: The first node receives second control information sent by the second node, where a sending priority of the second control information is higher than that of the second data signal.

In this possible implementation, the second node also sends the control information to the first node, to improve implementability of the solution.

In a possible implementation of the first aspect, the second control information includes at least one of a second repetition code, a second flow control code, a second parity check code, and a second mode code, where the second repetition code indicates that a plurality of second data signals with same content are consecutively sent; the second flow control code indicates whether the second node is allowed to receive a new data signal; the second parity check code indicates that sending of the second data is completed; and the second mode code is used to control switching of an operating mode of the second node.

In a possible implementation of the first aspect, the first node includes a transmit module and a receive module, the receive module is configured to send the second flow control code to the transmit module, and the transmit module is configured to determine, based on the second flow control code, whether to continue to send the first data signal to the second node.

In this possible implementation, the transmit module and the receive module that are of the first node may also communicate with each other, to implement effective feedback of the control information, so as to avoid waiting for the feedback signal in a sending process, and reduce a communication delay. Similarly, a receive module of the second node may also feed back the control information to a transmit module.

In a possible implementation of the first aspect, the foregoing step in which the first node outputs the second data signal includes: The first node determines whether the second data signal within a preset quantity of receiving times is a data signal obtained based on the second data; and if the second data signal within the preset quantity of receiving times is the data signal obtained based on the second data, the first node outputs the second data signal.

In this possible implementation, the first node determines, via a detection completion circuit of a self-timing mechanism, whether the second data signal has arrived stably, to resolve a problem that a delay is long and encoding is not flexible enough when a conventional C-unit-based detection completion circuit is used.

In a possible implementation of the first aspect, the foregoing step in which the first node outputs the second data signal includes: The first node parses and couples the second data signal to obtain output data; and the first node outputs the output data.

In this possible implementation, when the first node needs to output the second data signal to the synchronization node, the first node needs to parse and couple the second data signal, to improve implementability of the solution.

In a possible implementation of the first aspect, a transmission channel used by the first node to send the first data signal is a first communication channel, a transmission channel used by the first node to receive the second data signal is a second communication channel, and the first communication channel and the second communication channel are different transmission channels.

In this possible implementation, the first node and the second node use a full-duplex communication mode, and perform transmission through two channels, to avoid data blocking and reduce a data delay.

In a possible implementation of the first aspect, the method further includes: when the input data is the first data, the first node decomposes the first data into the first flit; and the first node encodes the first flit into the first data signal.

In this possible implementation, when the input data is the first data input by the synchronization node, the first node further needs to decompose and encode the first data, to improve implementability of the solution.

A second aspect of this application provides a communication node, configured to perform the method according to any one of the first aspect or the possible implementations of the first aspect. Specifically, the communication node includes modules or units configured to perform the method in any one of the first aspect or the possible implementations of the first aspect, for example, the transmit module and the receive module.

A third aspect of this application provides a communication device. The communication device includes a processor, a memory, and a computer-readable storage medium storing a computer program. The processor is coupled to the computer-readable storage medium, and computer-executable instructions are run on the processor. When the computer-executable instructions are executed by the processor, the processor performs the method according to any one of the first aspect or the possible implementations of the first aspect. Optionally, the communication device may further include an input/output (input/output, I/O) interface, and the computer-readable storage medium storing the computer program may be a memory.

A fourth aspect of this application provides a communication system, including at least two communication nodes. The at least two communication nodes are configured to perform the method according to any one of the first aspect or the possible implementations of the first aspect, to implement communication. The at least two communication nodes may perform unidirectional communication or bidirectional communication.

A fifth aspect of this application provides a computer-readable storage medium storing one or more computer-executable instructions. When the computer-executable instructions are executed by a processor, the processor performs the method according to any one of the first aspect or the possible implementations of the first aspect.

A sixth aspect of this application provides a computer program product storing one or more computer-executable instructions. When the computer-executable instructions are executed by a processor, the processor performs the method according to any one of the first aspect or the possible implementations of the first aspect.

A seventh aspect of this application provides a chip system. The chip system includes at least one processor and an interface. The interface is configured to receive data and/or a signal. The at least one processor is configured to support a computer device in implementing the function according to any one of the first aspect or the possible implementations of the first aspect. In a possible design, the chip system further includes a memory. The memory is configured to store program instructions and data that are necessary for a computer device. The chip system may include a chip, or may include a chip and another discrete component.

In this embodiment of this application, the first node receives the first data or the first data signal, where the first data signal is obtained by encoding the first flit, and the first flit is obtained by decomposing the first data; and the first node sends the first data signal to the second node based on the preset time interval, where the preset time interval is determined based on the transmission distance between the first node and the second node. The sending rate is controlled by configuring the interval for periodically sending the data, to ensure that the receive end can effectively process the data within the time. In addition, the feedback signal that increases the transmission delay is omitted in asynchronous clockless communication. In this way, the transmission delay is reduced and the system throughput rate is increased.

### BRIEF DESCRIPTION OF DRAWINGS

FIG. 1 is a diagram of an architecture of a scenario in which chiplets are interconnected;
FIG. 2 is a diagram of an architecture of a scenario of NoC internal interconnection;
FIG. 3A is a diagram of an embodiment of a communication system architecture according to an embodiment of this application;
FIG. 3B is a diagram of an embodiment of a communication procedure according to an embodiment of this application;
FIG. 4 is a diagram of another embodiment of an information transmission method according to an embodiment of this application;
FIG. 5 is a diagram of an embodiment of a first transmit module according to an embodiment of this application;
FIG. 6 is a diagram of an embodiment of a programmable delay unit according to an embodiment of this application;
FIG. 7 is a diagram of another embodiment of a communication procedure according to an embodiment of this application;
FIG. 8 is a diagram of another embodiment of a communication procedure according to an embodiment of this application;
FIG. 9 is a diagram of another embodiment of a first transmit module according to an embodiment of this application;
FIG. 10 is a diagram of an embodiment of a first receive module according to an embodiment of this application;
FIG. 11 is a diagram of an embodiment of a detection completion circuit according to an embodiment of this application;
FIG. 12 is a diagram of another embodiment of a first receive module according to an embodiment of this application;
FIG. 13 is a diagram of another embodiment of a communication system architecture according to an embodiment of this application;
FIG. 14 is a diagram of another embodiment of a communication system architecture according to an embodiment of this application;
FIG. 15A, FIG. 15B, and FIG. 15C are a diagram of another embodiment of a communication system architecture according to an embodiment of this application;
FIG. 16 is a diagram of an embodiment of a communication node according to an embodiment of this application;
FIG. 17 is a diagram of an embodiment of a communication system according to an embodiment of this application;
FIG. 18 is a diagram of another embodiment of a communication system according to an embodiment of this application; and
FIG. 19 is a diagram of an embodiment of a communication device according to an embodiment of this application.

### DESCRIPTION OF EMBODIMENTS

The following describes embodiments of this application with reference to the accompanying drawings. It is clear that the described embodiments are merely some rather than all of embodiments of this application. A person of ordinary skill in the art may know that with development of technologies and emergence of new scenarios, the technical solutions provided in embodiments of this application are also applicable to resolving similar technical problems.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The specific term "example" herein means "used as an example, embodiment or illustration". Any embodiment described as "example" is not necessarily explained as being superior or better than other embodiments.

In addition, to better describe this application, numerous specific details are given in the following specific implementations. A person skilled in the art should understand that this application can also be implemented without some specific details. In some instances, methods, means, elements and circuits that are well-known to a person skilled in the art are not described in detail, so that the subject matter of this application is highlighted.

The following uses an example to describe an application scenario in embodiments of this application.

With the booming development of a system on chip (system-on-chip, SoC), a chip keeps increasing in scale. To improve inter-chip and intra-chip communication efficiency, a communication delay needs to be reduced. Due to slowdown in updating a chip manufacturing process, performance of an existing synchronous circuit design is close to a limit bottleneck. Therefore, currently, an asynchronous clockless circuit design manner is used, so that a delay can be effectively reduced, and dynamic power consumption can be reduced.

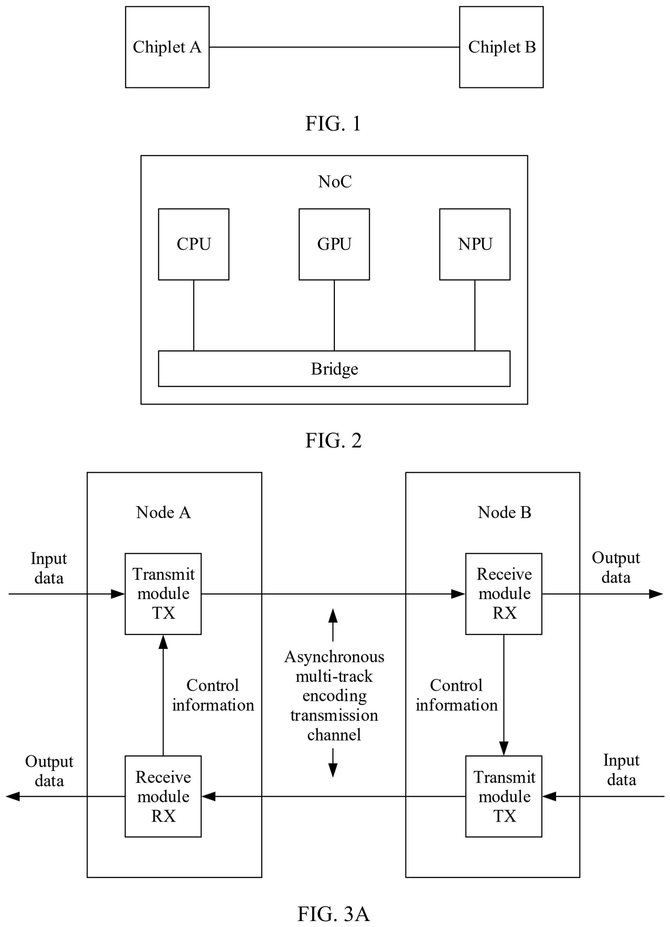

As shown in FIG. 1, in a scenario in which chiplets (chiplet) are interconnected, a distance between the chiplets may be long, and long-distance transmission interconnection may cause problems of a long delay and difficult convergence of a time sequence constraint. As shown in FIG. 2, in a scenario of a network-on-chip (network on chip, NoC) processor, NoC internal networking includes units such as a central processing unit (central processing unit, CPU), a graphics processing unit (graphics processing unit, GPU), a network processing unit (neural network process unit, NPU), and a bridge. Communication between these units requires an extremely low delay. In addition, communication between a plurality of NoCs also requires a low delay.

However, in the current asynchronous clockless circuit design, a control flow is not flexible and reliable enough, and data is not sent in some time periods in which data can be sent. In addition, in the current asynchronous clockless circuit design, a feedback signal is further used to ensure integrity and accuracy of data transmission. However, a transmit end continues to perform next sending only after receiving the feedback signal, and waiting time also increases a transmission delay of a system. As a result, there is still a problem that a transmission delay is long.

In view of this, embodiments of this application provide an information transmission method, to flexibly control chip communication and reduce a data transmission delay. Embodiments of this application further provide a corresponding communication node, a communication device, a communication system, a computer-readable storage medium, a computer program product, and the like. The following separately provides descriptions.

As shown in FIG. 3A, an embodiment of this application provides a communication system architecture, to implement efficient transmission between nodes. In the communication system architecture, an asynchronous clockless signal is used, and a feedback signal is not required, to reduce power consumption and reduce a delay.

The communication system architecture includes two symmetric asynchronous communication transceiver nodes: a node A and a node B. Each node includes a transmit module TX and a receive module RX. The transmit module and the receive module may interact with each other, and the nodes perform transmission in an asynchronous multi-rail encoding manner. A full-duplex communication mode is used between the nodes, that is, the two nodes independently transmit data bidirectionally, and each node uses an asynchronous multi-rail encoding transmission channel.

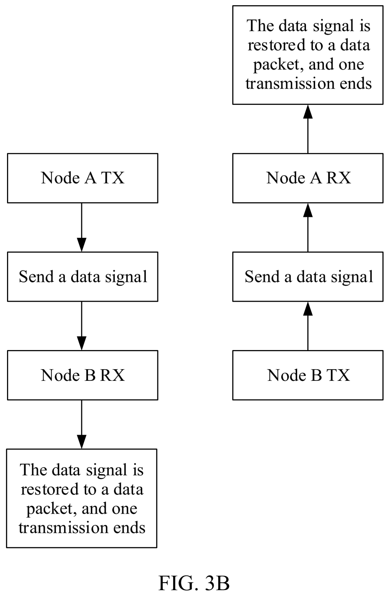

As shown in FIG. 3B, the transmit module TX may perform operations such as disassembling an input data packet (packet) into a flit (flit), and encoding the flit into an asynchronous multi-rail signal. The receive module receives data sent through the asynchronous multi-rail encoding transmission channel, identifies a valid signal, decodes the valid signal into flits, assembles the flits into a data packet, and sends the data packet to a subsequent module for output.

For example, the transmit module TX of the node A obtains input data, and transmits the input data to the receive module RX of the node B through the asynchronous multi-rail encoding transmission channel, and the receive module RX of the node B outputs output data. Similarly, the transmit module TX of the node B obtains input data, and transmits the input data to the receive module RX of the node A through the asynchronous multi-rail encoding transmission channel, and the receive module RX of the node A outputs output data.

In addition, the transmit module TX of the node A further transmits control information to the receive module RX of the node B through the asynchronous multi-rail encoding transmission channel, and the receive module RX of the node B forwards the control information to the transmit module TX of the node B. Similarly, the transmit module TX of the node B further transmits control information to the receive module RX of the node A through the asynchronous multi-rail encoding transmission channel, and the receive module RX of the node A forwards the control information to the transmit module TX of the node A.

The communication system architecture may be applied to the scenario in which the chiplets are interconnected shown in FIG. 1, or may be applied to the NoC shown in FIG. 2. For example, the node A is a submodule in a chiplet A, and the node B is a submodule in a chiplet B, so that low-latency communication between the chiplet A and the chiplet B is implemented. For another example, the node A is a CPU in the NoC, and the node B is a GPU in the NoC, so that low-latency communication inside the NoC processor is implemented.

The following describes, with reference to the foregoing application scenario, the information transmission method provided in embodiments of this application.

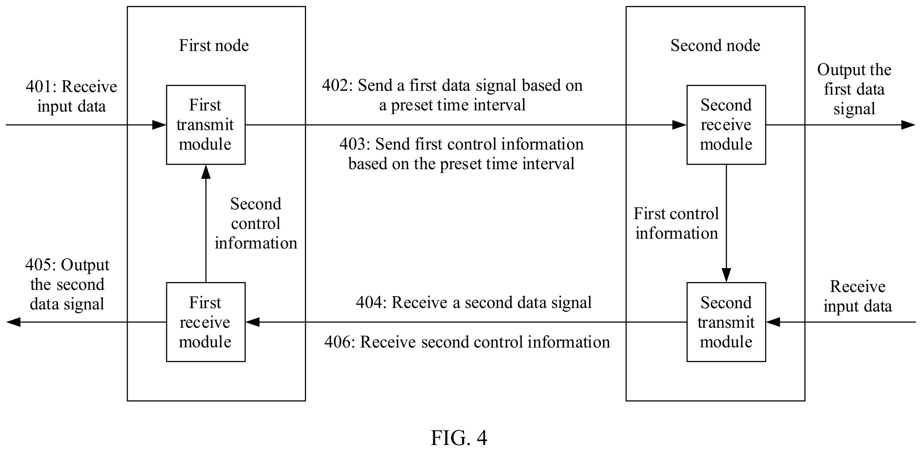

As shown in FIG. 4, an embodiment of an information transmission method according to an embodiment of this application includes the following steps.

401: A first node receives input data.

402: The first node sends a first data signal to a second node based on a preset time interval.

In this embodiment of this application, the information transmission method is applied to the communication system shown in FIG. 3A. The first node is the node A in the communication system shown in FIG. 3A, and the second node is the node B in the communication system shown in FIG. 3A. Alternatively, the first node is the node B in the communication system shown in FIG. 3A, and the second node is the node A in the communication system shown in FIG. 3A. In other words, functions of the first node and the second node are the same. In this embodiment of this application, an example in which the first node is the node A is used for description.

The first node includes a first receive module and a first transmit module, and the second node includes a second receive module and a second transmit module. The following describes in detail the first transmit module of the first node. Input data received by the first transmit module of the first node may be first data, or may be a first data signal. The following separately provides descriptions.

### 1. First data

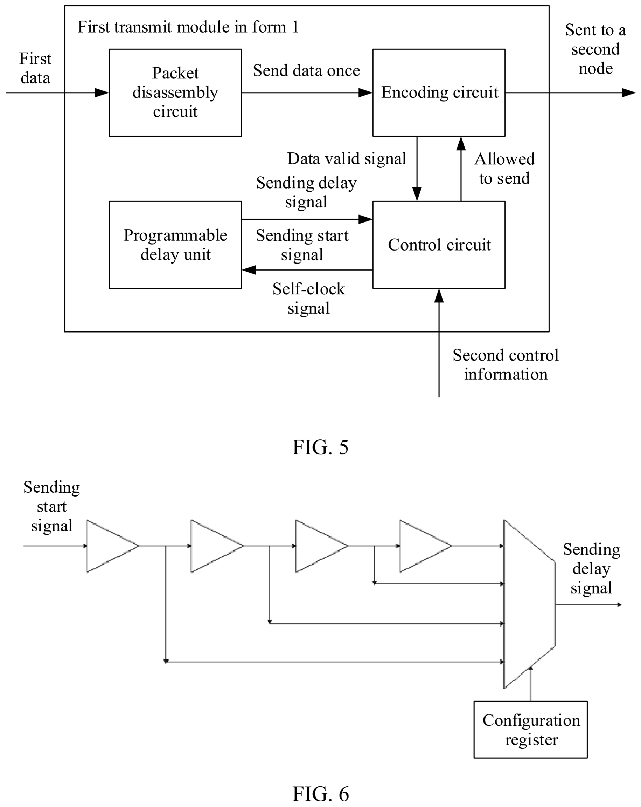

In this embodiment of this application, the first data is a data packet sent by a synchronization node. When the input data is the first data, the first node decomposes the first data into a first flit, and encodes the first flit into the first data signal. As shown in FIG. 5, when the input data received by the first transmit module is the first data, the first transmit module is in form 1, and the first transmit module includes a packet disassembly circuit, an encoding circuit, a programmable delay unit, and a control circuit.

Specifically, the packet disassembly circuit is configured to disassemble a data packet (packet) from a synchronous domain node into a flit (flit) format, and then the encoding circuit encodes the flit into the first data signal (an asynchronous transmission signal). The programmable delay unit is a key module of the first transmit module. As shown in FIG. 6, the programmable delay unit is configured to configure, based on actual line length information (that is, a transmission distance between the first node and the second node) in a circuit design, an interval (that is, the preset time interval) for periodically sending data, to control a sending rate, so as to ensure that a receive end (that is, the second node) can effectively process the data within the time. Because the transmission distance between the first node and the second node is determined, the preset time interval may also be determined according to a plurality of experiments.

After receiving the flit transmitted by the packet disassembly circuit, the encoding circuit generates a data valid signal and sends the data valid signal to the control circuit. After receiving a sending start signal from the control circuit, the programmable delay unit starts to control the sending interval, and pulls up a sending delay signal after the preset time interval expires. In the control circuit, the data valid signal and the sending delay signal sent by the programmable delay unit jointly function to generate a self-clock signal. In an initial state, the sending delay signal is high. When the encoding circuit receives new valid data, the data valid signal is also high, and the self-clock signal is valid. The self-clock signal is used to drive data sending, for example, allow the encoding circuit to start to send the first data signal. In this case, the control circuit is further configured to pull down the data valid signal and the sending delay signal at the same time, and sends the sending start signal to the programmable delay unit to start the programmable delay unit. After the preset time interval, that is, after the first data signal is received by the second receive module of the second node, the sending delay signal is pulled up again, and a new data valid signal is waited to be generated next time, so that an event-driven data sending and receiving mechanism is achieved. In addition, the control circuit is further configured to receive second control information from the first receive module of the current node (the first node), and control, based on the second control information, whether to allow sending of the first data signal.

For example, after the first transmit module receives the first data, the packet disassembly circuit disassembles the first data into the flit, and converts synchronous data into asynchronous data. The flit is a minimum valid unit for transmitting data, and valid data of one flit may be defined as 4 bits. Asynchronous multi-rail encoding is used in a transmission protocol. For example, as shown in Table 1, the encoding circuit uses a 2-of-7 code (7 transmission lines are used to represent 4-bit data, and a maximum of two 1s is included in the code) to encode the flit to obtain the first data signal, where 16 combinations are used to represent 4-bit data information.

**Table 1**

| Binary data | Reference code | Binary data | Reference code |
|---|---|---|---|
| 0000 | 001_0001 | 1000 | 100_0001 |
| 0001 | 001_0010 | 1001 | 100_0010 |
| 0010 | 001_0100 | 1010 | 100_0100 |
| 0011 | 001_1000 | 1011 | 100_1000 |
| 0100 | 010_0001 | 1100 | 000_0011 |
| 0101 | 010_0010 | 1101 | 000_0110 |
| 0110 | 010_0100 | 1110 | 000_1100 |
| 0111 | 010_1000 | 1111 | 000_1001 |

After obtaining the first data signal, the control circuit determines, based on the second control information of the first receive module and the sending signal of the programmable delay unit, whether to send the first data signal. The second control information is sent by the second node to the first receive module. After receiving the second control information, the first receive module sends the second control information to the first transmit module. If the second control information indicates that sending of the first data signal is suspended, for example, when a buffer of the second node is full and new data cannot be received, the first transmit module suspends sending of the first data signal. After the first transmit module receives the second control information from the second node again, the control circuit of the first transmit module sends the sending start signal to the programmable delay unit, the programmable delay unit sends the sending delay signal to the control circuit, and the control circuit controls the encoding circuit to continue to send the first data signal, that is, send the first data signal to the second node after the preset time interval expires.

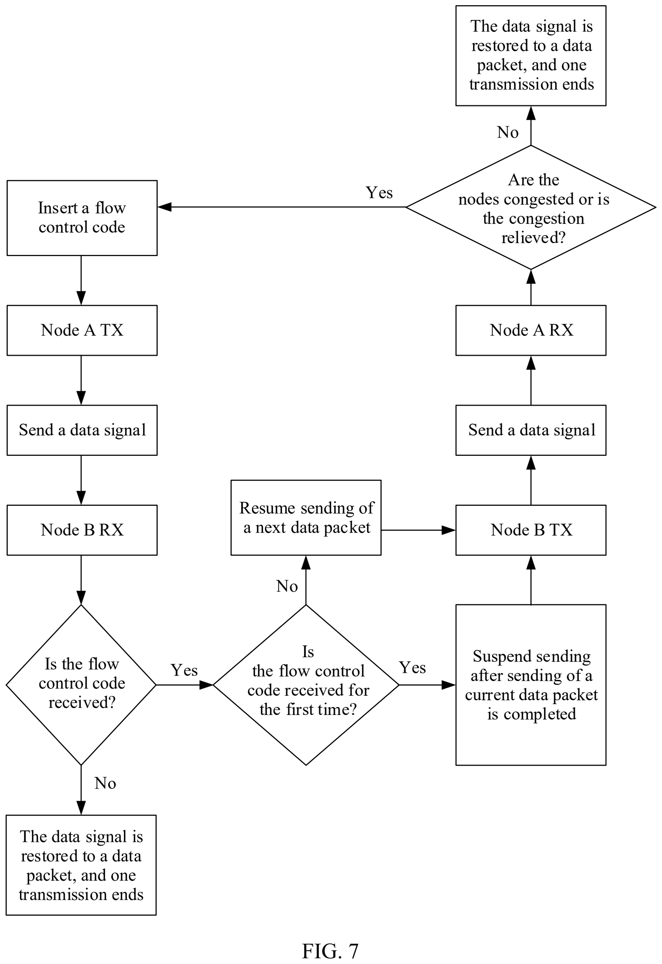

For example, on a basis of FIG. 3B, as shown in FIG. 7, when nodes of the first receive module of the node A (the first node) are congested (a buffer is full), the first transmit module of the node A sends a first flow control code to the second receive module of the node B (the second node). After receiving the first flow control code, the second receive module of the node B sends the first flow control code to the second transmit module of the node B. The second transmit module receives the first flow control code for the first time, and suspends continuing sending of a second data signal, or suspends sending of data after sending of a second data signal corresponding to a complete data packet in second data is completed. When the congestion of the first receive module of the node A is relieved, the first flow control code is sent by using the foregoing same method. When the second transmit module of the node B receives the first flow control code for the second time, the second transmit module continues to send the second data signal, or starts to send a second data signal corresponding to a next complete data packet in the second data.

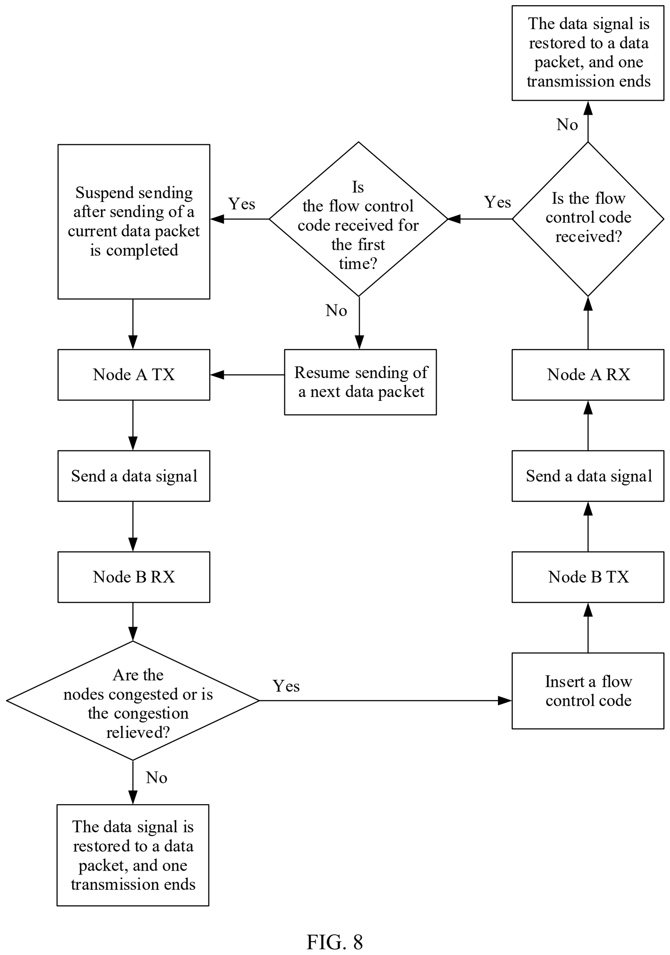

Similarly, as shown in FIG. 8, when nodes of the second receive module of the node B (the second node) are congested (a buffer is full), the second transmit module of the node B sends a second flow control code to the first receive module of the node A (the first node). After receiving the second flow control code, the first receive module of the node A sends the second flow control code to the first transmit module of the node A. The first transmit module receives the first flow control code for the first time, and suspends continuing sending of the first data signal, or suspends sending of data after sending of a first data signal corresponding to a complete data packet in the first data is completed. When the congestion of the second receive module of the node B is relieved, the second flow control code is sent by using the same method. When the first transmit module of the node A receives the second flow control code for the second time, the first transmit module continues to send the first data signal, or starts to send a first data signal corresponding to a next complete data packet in the first data.

### 2. First data signal

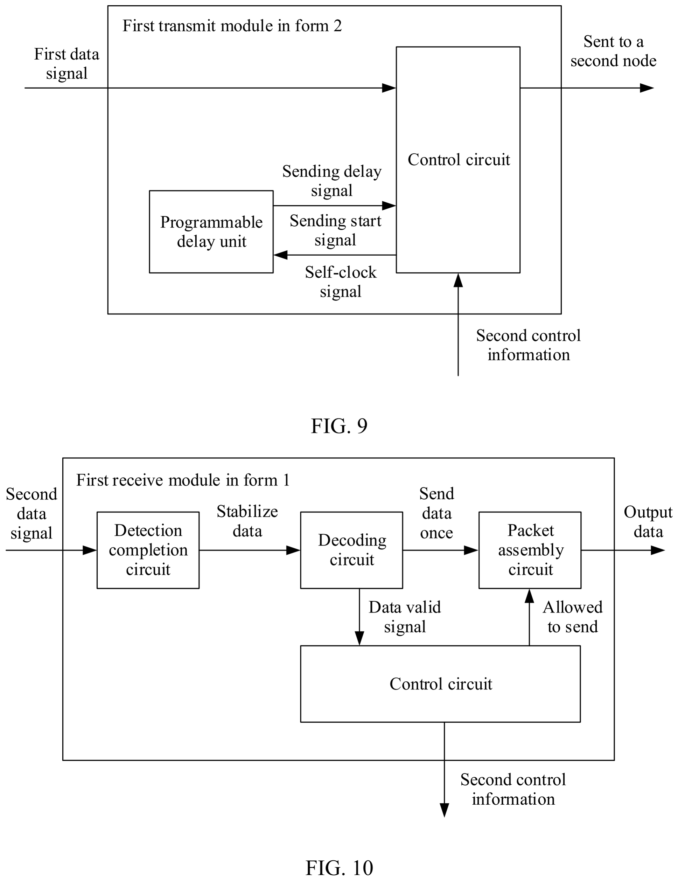

In this embodiment of this application, the first data signal is obtained by encoding a first flit, and the first flit is obtained by decomposing the first data. As shown in FIG. 9, when the input data received by the first transmit module is the first data signal, the first transmit module is in form 2, and the first transmit module includes a programmable delay unit and a control circuit. In this case, the first data signal is sent by an asynchronous node to the first node, that is, the asynchronous node or a node before the asynchronous node has processed the first data, to obtain the first data signal. After receiving the first data signal, the first transmit module only needs to control, based on second control information and a sending signal, whether to allow sending of the first data signal, and send the first data signal to the second node when sending is allowed.

403: The first node sends first control information to the second node based on the preset time interval.

In addition to sending the first data signal to the second node, the first node further sends the first control information to the second node. The first control information includes at least one of a first repetition code, a first flow control code, a first parity check code, and a first mode code, where the first repetition code indicates that a plurality of first data signals with same content are consecutively sent; the first flow control code indicates whether the first node is allowed to receive a new data signal; the first parity check code indicates that sending of the first data is completed; and the first mode code is used to control switching of an operating mode of the first node.

**Table 2**

| Control information | Reference code |
|---|---|
| Repetition code | 000_0101 |
| Flow control code | 000_1010 |
| Odd check code | 101_0000 |
| Even check code | 110_0000 |
| Mode code | 011_0000 |

Specifically, in a 2-of-7 code, 21 combinations may be formed in total. In addition to 16 combinations used to represent data information, as shown in Table 2, remaining five combinations are used to represent the first control information. When a plurality of first data signals with same content are consecutively sent, the first repetition code (repeat) is inserted at intervals in consecutive repeated flits corresponding to the first data signal. When the first transmit module receives a 1^{st} first flow control code (flow ctrl), it indicates that the second receive module of the second node cannot receive new data any more, and the first transmit module suspends sending of the first data signal. If the first flow control code is received again, it indicates that the first transmit module of the current node is allowed to continue to send the first data signal. The first parity check code includes an odd check code (odd EOP) and an even check code (even EOP). The first parity check code is used for odd check and even check, is generated at an end of a string of complete and valid first data signals, and indicates the end of the string of first data signals. The first mode code (mode) is used to control the first node to switch between a normal operating mode and a test mode.

Because the first control information usually carries important control flow information, a sending priority of the first control information is higher than that of the first data signal.

It should be understood that there is no sequence for performing the step 403. For example, the step 403 is performed before the step 401. In this case, the first node sends the first flow control code to the second node, to indicate that the first node cannot receive new data. For another example, the step 403 and the step 402 are performed at the same time. In a process in which the first node sends the first data signal to the second node, the first repetition code is inserted to distinguish between the consecutive repeated flits corresponding to the first data signal.

It should be understood that a structure of the second transmit module of the second node, and an implemented method and function are the same as those of the first transmit module of the first node. Details are not described in embodiments of this application again.

404: The first node receives the second data signal sent by the second node.

405: The first node outputs the second data signal.

The following describes in detail the first receive module of the first node. Data that is sent by the second node and that is received by the first receive module of the first node is the second data signal. The second data signal is obtained by encoding a second flit. The second flit is obtained by decomposing the second data, and may be a second data signal obtained by processing the second data by the second node, or may be a second data signal sent to the second node after the second data signal is obtained by processing the second data by a previous node of the second node. After receiving the second data signal, the first receive module outputs the second data signal. The first receive module may directly output the second data signal to the asynchronous node, or may process the second data signal into the second data and then output the second data to the synchronization node. The following separately provides descriptions.

### 1. Second data

When the first receive module needs to output the second data signal to the synchronization node, the first receive module is in form 1. As shown in FIG. 10, the first receive module includes a detection completion circuit, a decoding circuit, a packet assembly circuit, and a control circuit.

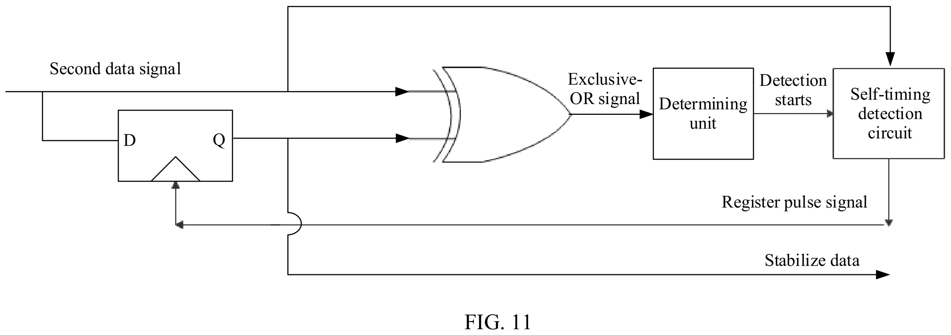

After being input to the first receive module, the second data signal first passes through the detection completion circuit. As shown in FIG. 11, the detection completion circuit includes a register, an exclusive-OR gate, a determining unit, and a self-timing detection circuit. The register is responsible for outputting a stable signal (the second data signal), a register clock signal of the register is provided by the self-timing detection circuit, the exclusive-OR gate is used to identify whether a current state is a detection state or a stable state, the determining unit starts detection based on a result of the exclusive-OR gate, to detect whether new input data arrives, and the timing detection circuit determines whether the current input data is stable by determining whether input data is the same in a specific quantity of times, and outputs the register clock signal (a register pulse signal). If the input data is not the same, re-counting is performed, that is, the first node determines whether second data signals within a preset quantity of receiving times are all data signals obtained based on the second data. If the second data signals within the preset quantity of receiving times are all the data signals obtained based on the second data, the decoding circuit parses the determined stable second data signal, and sends data obtained through parsing to the packet assembly circuit. The packet assembly circuit is further configured to convert asynchronous data into synchronous data. The control circuit controls, based on a data valid signal sent by the decoding circuit, the packet assembly circuit to send output data obtained through coupling.

### 2. Second data signal

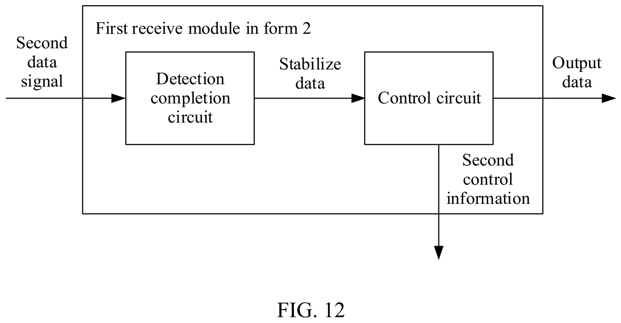

As shown in FIG. 12, when the first receive module needs to output the second data signal to the asynchronous node, the first receive module is in form 2, and the first receive module includes a detection completion circuit and a control circuit. That is, the first receive module directly continues to output the second data signal without parsing and assembling the second data signal.

406: The first node receives the second control information sent by the second node.

In addition to receiving the second data signal sent by the second node, the first node further receives second control information sent by the second node. The second control information includes at least one of a second repetition code, a second flow control code, a second parity check code, and a second mode code, where the second repetition code indicates that a plurality of second data signals with same content are consecutively sent; the second flow control code indicates whether the second node is allowed to receive a new data signal; the second parity check code indicates that sending of the second data is completed; and the second mode code is used to control switching of an operating mode of the second node. That is, content of the second control information is the same as that of the first control information, and a sending priority of the second control information is higher than that of the second data signal.

For example, the first receive module of the first node receives the second control information sent by the second node, where the second control information is the second flow control code. In this case, the first receive module continues to send the second flow control code to the first transmit module. When receiving the second flow control code for the first time, the first transmit module suspends sending of the first data signal to the second node. When the second transmit module receives the second flow control code again, the first transmit module continues to send the first data signal to the second node.

It should be understood that there is no sequence for performing the step 406. For example, the step 406 is performed before the step 404. In this case, the first node receives the second flow control code from the second node, to indicate that the second node cannot receive new data. For another example, the step 403 and the step 402 are performed at the same time. In a process in which the first node receives the second data signal from the second node, the first repetition code is inserted into the second data signal to distinguish between the consecutive repeated flits corresponding to the second data signal.

In addition, an execution sequence of the step 404 to the step 406 is irrelevant to the step 401 to the step 403. To be specific, a sending process and a receiving process of the first node may be performed at the same time, or may be sequentially performed. This is not limited in embodiments of this application.

It should be understood that a structure of the second receive module of the second node, and an implemented method and function are the same as those of the first receive module of the first node. Details are not described in embodiments of this application again.

In this embodiment of this application, a transmission channel used by the first node to send the first data signal is a first communication channel, a transmission channel used by the first node to receive the second data signal is a second communication channel, and the first communication channel and the second communication channel are different transmission channels.

In this embodiment of this application, the information transmission method is event-driven, and does not operate when there is no event, to reduce dynamic power consumption of a circuit. In addition, a self-clock manner is used for transmission, to reduce global clock tree overheads and bring a power consumption gain. In addition, in the information transmission method, a two-phase non-return-to-zero handshake manner is used. Compared with a four-phase handshake manner, in this manner, a delay is reduced by one time, and there is no feedback signal (for example, an ack signal), to further reduce a delay and bring a power consumption gain. In addition, data transmission in the information transmission method is loose, and does not need to meet a strict time sequence requirement required in a synchronization node design, to bring flexibility benefits.

The information transmission method provided in embodiments of this application may be applied to a plurality of different communication system architectures. The following describes in detail an information transmission manner provided in embodiments of this application with reference to several examples.

### Example 1

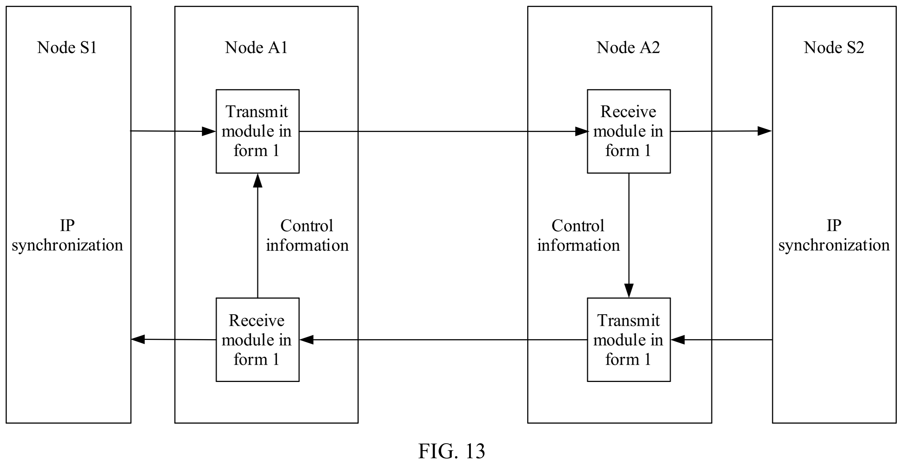

As shown in FIG. 13, in the communication system architecture, a synchronization domain includes a synchronization node S1 and a synchronization node S2, and an asynchronous domain includes a first node A1 and a second node A2. When data needs to be transmitted between the synchronization node S1 and the synchronization node S2, the first node A1 and the second node A2 are disposed between the synchronization node S1 and the synchronization node S2, and first transmit modules, first receive modules, second transmit modules, and second receive modules are all in form 1.

For example, the first transmit module of the first node A1 receives first data input by the synchronization node S1, processes the first data into a first data signal, and sends the first data signal to the second receive module of the second node A2 through a first communication channel. The second receive module restores the first data signal into the first data, and sends the first data to the synchronization node S2.

Similarly, the second transmit module of the second node A2 receives second data input by the synchronization node S2, processes the second data into a second data signal, and sends the second data signal to the first receive module of the first node A1 through a second communication channel. The first receive module restores the second data signal into the second data, and sends the second data to the synchronization node S1.

In addition, in the first node A1, the first receive module further receives second control information sent by the second node A2, and the first receive module continues to send the second control information to the first transmit module. In the second node A1, the second receive module further receives first control information sent by the first node A1, and the second receive module continues to send the first control information to the second transmit module.

It should be understood that the architecture shown in FIG. 13 may also be understood as a point-to-point networking mode (excluding an asynchronous routing module). The architecture may be adapted to and interconnected with a standard synchronization interface, to greatly reduce a transmission delay between the synchronization node S1 and the synchronization node S2.

### Example 2

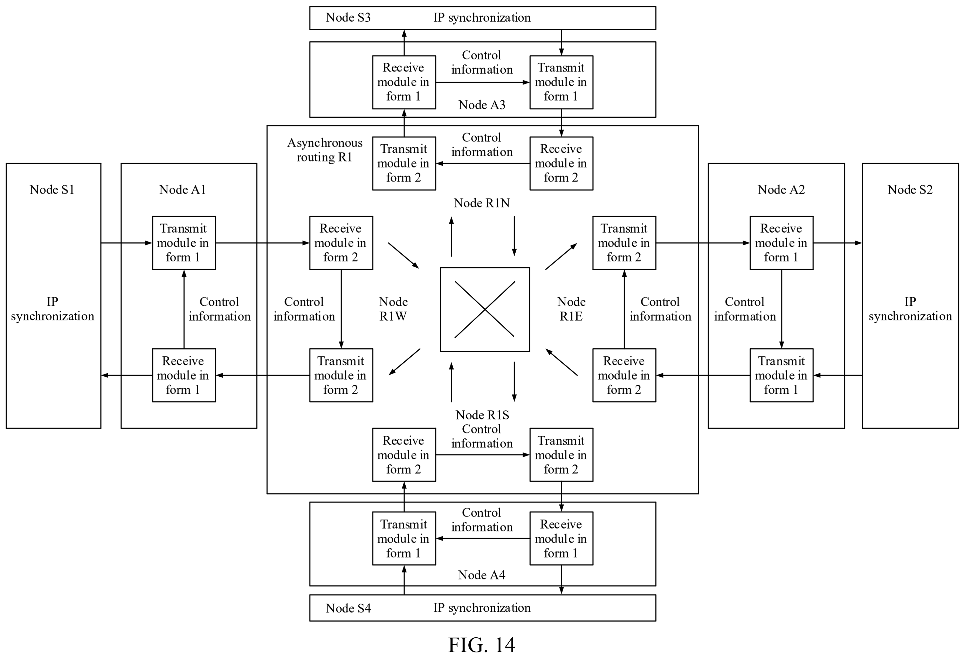

As shown in FIG. 14, in the communication system architecture, a synchronization domain includes a synchronization node S1, a synchronization node S2, a synchronization node S3, and a synchronization node S4, and an asynchronous domain includes a first node A1, a second node A2, a third node A3, a fourth node A4, and an asynchronous routing module R1. When data needs to be transmitted among the synchronization node S1, the synchronization node S2, the synchronization node S3, and the synchronization node S4, the first node A1, the second node A2, the third node A3, and the fourth node A4 are respectively disposed for the synchronization node S1, the synchronization node S2, the synchronization node S3, and the synchronization node S4. The first node A1, the second node A2, the third node A3, and the fourth node A4 may be separately the first node or the second node described in the foregoing embodiments.

In addition, the asynchronous routing module R1 is further disposed among the first node A1, the second node A2, the third node A3, and the fourth node A4. The asynchronous routing module R1 includes a node R1N, a node R1W, a node R1E, and a node R1S. The node R1N, the node R1W, the node R1E, and the node R1S may be separately the first node or the second node described in the foregoing embodiments.

Transmit modules and receive modules of the first node A1, the second node A2, the third node A3, and the fourth node A4 are all in form 1, and are configured to transmit data with a synchronous node and an asynchronous node. A transmit module and a receive module of the asynchronous routing module R1 are all in form 2, and are configured to transmit data with the asynchronous node.

It should be understood that the architecture shown in FIG. 14 may also be understood as a simplified networking mode (including the asynchronous routing module). This improves a data transmission capability of the synchronization node S1 to the synchronization node S4, and in addition, intermediate routing is also implemented in an asynchronous manner, to further improve data forwarding efficiency.

### Example 3

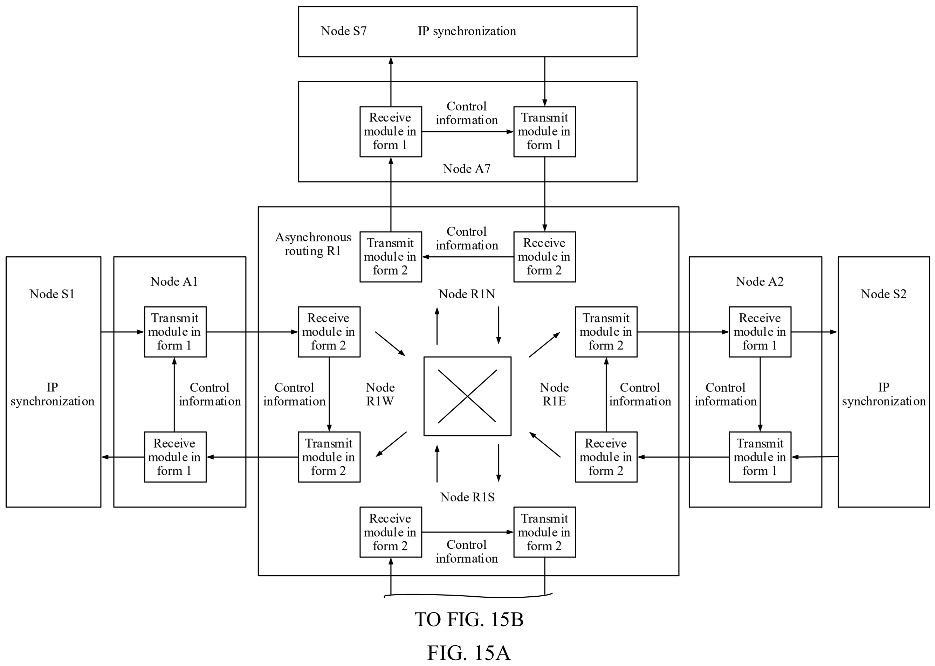

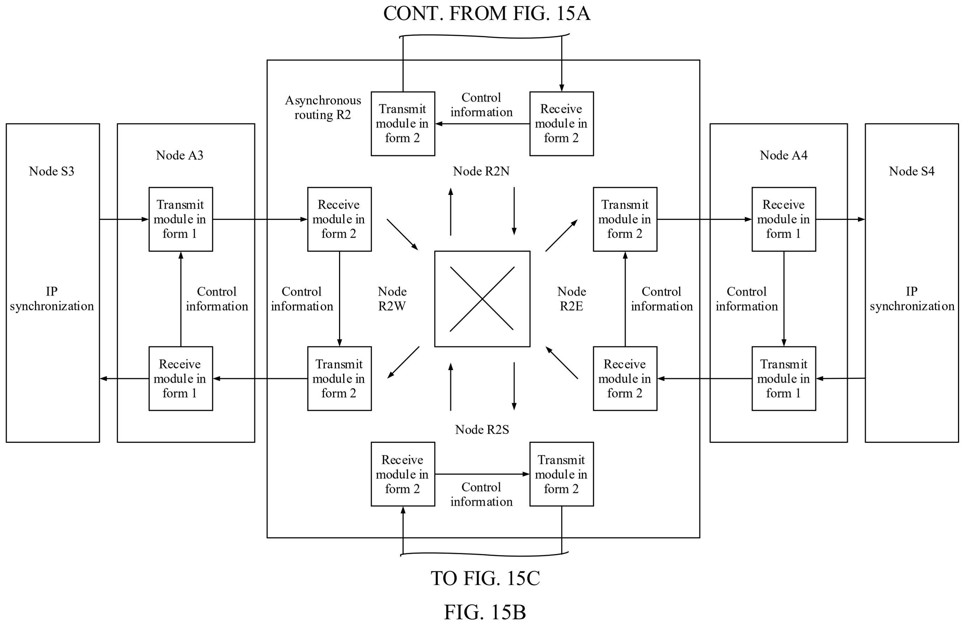

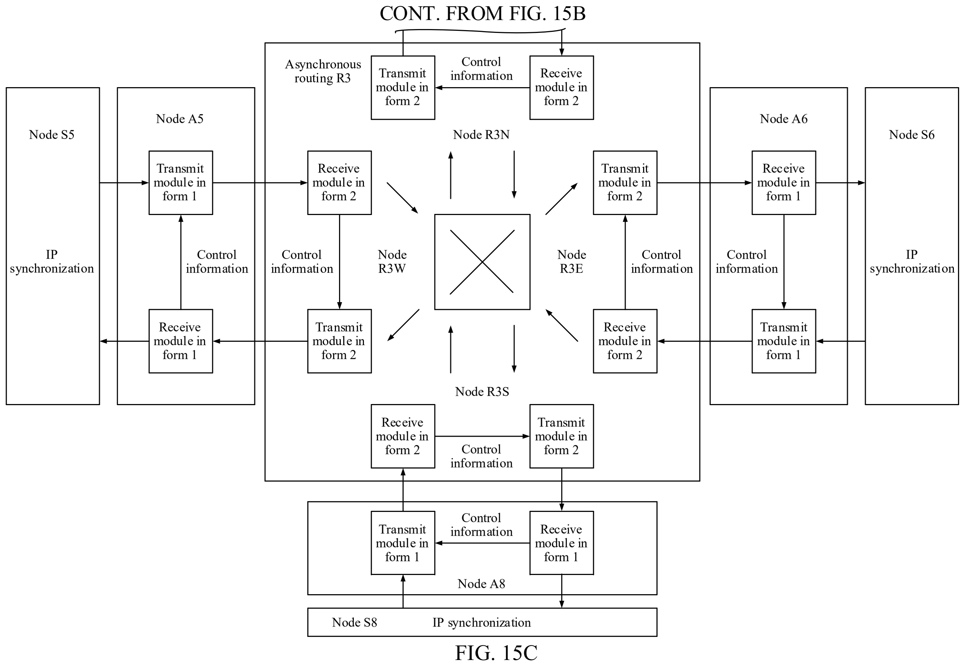

As shown in FIG. 15A, FIG. 15B, and FIG. 15C, on a basis of Example 2, when data needs to be transmitted among a synchronization node S1, a synchronization node S2, a synchronization node S3, a synchronization node S4, a synchronization node S5, a synchronization node S6, a synchronization node S7, and a synchronization node S8, a first node A1, a second node A2, a third node A3, a fourth node A4, a fifth node A5, a sixth node A6, a seventh node A7, and an eighth node A8 are respectively disposed for the synchronization node S1, the synchronization node S2, the synchronization node S3, the synchronization node S4, the synchronization node S5, the synchronization node S6, the synchronization node S7, and the synchronization node S8. The first node A1, the second node A2, the third node A3, the fourth node A4, the fifth node A5, the sixth node A6, the seventh node A7, and the eighth node A8 may be separately the first node or the second node described in the foregoing embodiments.

In addition, an asynchronous routing module R1, an asynchronous routing module R2, and an asynchronous routing module R3 are further disposed among the first node A1, the second node A2, the third node A3, the fourth node A4, the fifth node A5, the sixth node A6, the seventh node A7, and the eighth node A8. The asynchronous routing module R1 includes a node R1N, a node R1W, a node R1E, and a node R1S. The asynchronous routing module R2 includes a node R2N, a node R2W, a node R2E, and a node R2S. The asynchronous routing module R3 includes a node R3N, a node R3W, a node R3E, and a node R3S. The node R1N, the node R1W, the node R1E, the node R1S, the node R2N, the node R2W, the node R2E, the node R2S, the node R3N, the node R3W, the node R3E, and the node R3S may be separately the first node or the second node described in the foregoing embodiments.

It should be understood that, the architecture shown in FIG. 15A, FIG. 15B, and FIG. 15C may also be understood as a flexible networking mode (including the asynchronous routing modules, and communication is also performed between the asynchronous routing modules), and may be well expanded in a scale-out manner (an architecture technology, which usually refers to distributing computing and storage resources in a system to a plurality of nodes for extending functions and performance of the system). Therefore, the architecture is also highly adaptable to a large-scale NoC architecture.

It can be learned from the foregoing embodiments that beneficial effect brought by the information transmission method provided in embodiments of this application includes but is not limited to the following four points:
(1) A sending rate is controlled by configuring an interval for periodically sending data, to ensure that a receive end can effectively process data within the time. In addition, a feedback signal that increases a transmission delay is omitted in asynchronous clockless communication. In this way, a transmission delay is reduced, a system throughput rate is increased, and a problem that a control flow is inflexible and unreliable in an asynchronous transmission system is resolved.
(2) Consecutive repeated data is transmitted by using a repetition code, so that transmission does not return to zero. Only when a peer end needs feedback information, control information is inserted into an original data transmission channel to implement feedback, so as to implement no feedback signal. In this way, a problem of a long delay and a large area of data detection at the receive end in the asynchronous transmission system is resolved.
(3) Another function of the feedback signal is further implemented by adding encoding of the control information, to improve flexibility and reliability of data transmission.
(4) A detection completion circuit of a self-timing mechanism is used to determine whether the data has arrived stably, to resolve a problem that a delay is long and encoding is not flexible enough when a conventional C-unit-based detection completion circuit is used.

The foregoing describes the information transmission method provided in embodiments of this application. The following describes related devices provided in embodiments of this application with reference to the accompanying drawings.

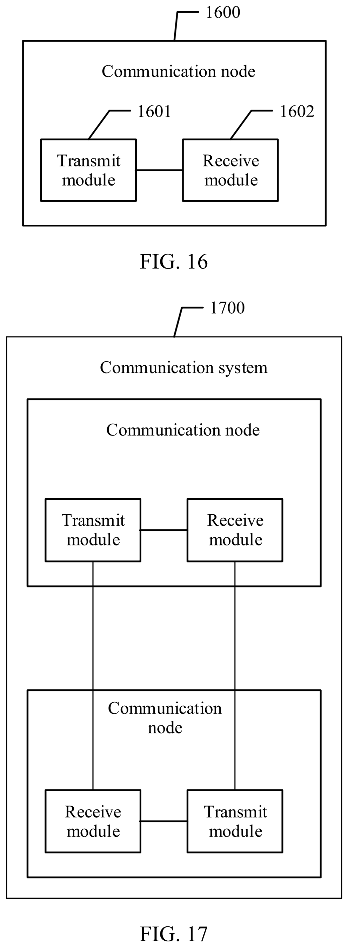

As shown in FIG. 16, an embodiment of a communication node 1600 provided in an embodiment of this application includes:
a transmit module 1601, configured to receive input data, where the input data is first data or a first data signal, the first data signal is obtained by encoding a first flit, and the first flit is obtained by decomposing the first data. The transmit module 1601 is configured to perform the step 401 in the foregoing method embodiment.

The transmit module 1601 is further configured to send the first data signal to a second node based on a preset time interval, where the preset time interval is determined based on a transmission distance between the communication node and the second node. The transmit module 1601 is further configured to perform the step 402 in the foregoing method embodiment.

Optionally, the transmit module 1601 is further configured to send first control information to the second node based on the preset time interval, where a sending priority of the first control information is higher than that of the first data signal.

Optionally, the first control information includes at least one of a first repetition code, a first flow control code, a first parity check code, and a first mode code, where the first repetition code indicates that a plurality of first data signals with same content are consecutively sent; the first flow control code indicates whether the first node is allowed to receive a new data signal; the first parity check code indicates that sending of the first data is completed; and the first mode code is used to control switching of an operating mode of the first node.

Optionally, the communication node 1600 further includes a receive module 1602. The receive module 1602 is configured to receive a second data signal sent by the second node, where the second data signal is obtained by encoding a second flit, and the second flit is obtained by decomposing second data. The receive module 1602 is further configured to output the second data signal.

Optionally, the receive module 1602 is further configured to receive second control information sent by the second node, where a sending priority of the second control information is higher than that of the second data signal.

Optionally, the second control information includes at least one of a second repetition code, a second flow control code, a second parity check code, and a second mode code, where the second repetition code indicates that a plurality of second data signals with same content are consecutively sent; the second flow control code indicates whether the second node is allowed to receive a new data signal; the second parity check code indicates that sending of the second data is completed; and the second mode code is used to control switching of an operating mode of the second node.

Optionally, the receive module 1602 is configured to send the second flow control code to the transmit module, and the transmit module 1601 is configured to determine, based on the second flow control code, whether to continue to send the first data signal to the second node.

Optionally, the receive module 1602 is specifically configured to determine whether the second data signal within a preset quantity of receiving times is a data signal obtained based on the second data; and the receive module 1602 is further specifically configured to: if the second data signal within the preset quantity of receiving times is the data signal obtained based on the second data, output the second data signal.

Optionally, the receive module 1602 is specifically configured to parse and couple the second data signal to obtain output data, and the receive module 1602 is further configured to output the output data.

Optionally, a transmission channel used by the transmit module 1601 to send the first data signal is a first communication channel, a transmission channel used by the receive module 1602 to receive the second data signal is a second communication channel, and the first communication channel and the second communication channel are different transmission channels.

Optionally, the transmit module 1601 is further configured to: when the input data is the first data, decompose the first data into the first flit; and the transmit module 1601 is further configured to encode the first flit into the first data signal.

The communication node 1600 provided in this embodiment of this application may be the chiplet A or the chiplet B shown in FIG. 1, or an internal module of the chiplet A or the chiplet B, or may be the CPU, the NPU, the GPU, or the bridge shown in FIG. 2, or may be the node A or the node B shown in FIG. 3A, or may be the first node or the second node shown in FIG. 4. For a specific implementation, refer to corresponding content in the foregoing embodiment of the information transmission method. Details are not described herein again.

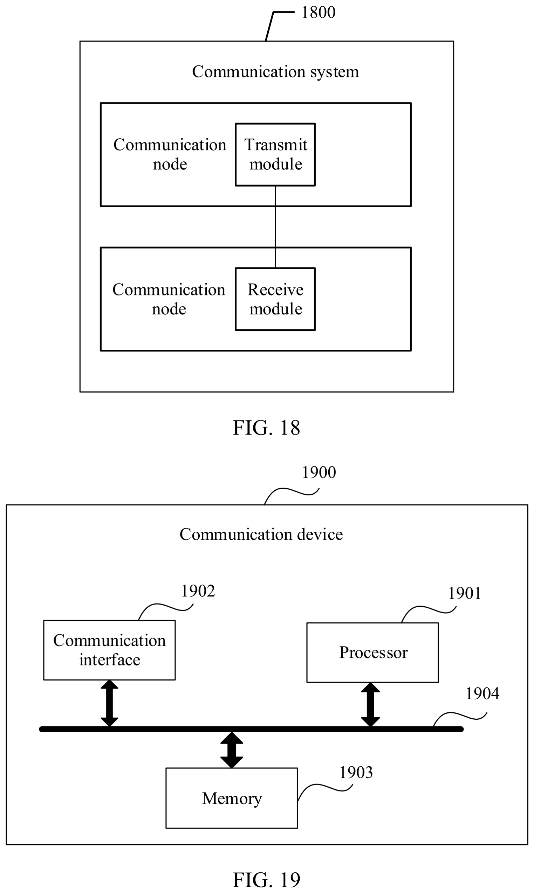

As shown in FIG. 17, an embodiment of this application further provides a communication system 1700. The communication system 1700 includes at least two communication nodes shown in FIG. 16, and bidirectional communication is performed between the at least two communication nodes. As shown in FIG. 18, in another possible implementation, a communication system 1800 is configured to perform unidirectional communication, one communication node in the communication system 1800 includes only a transmit module, and the other communication node includes only a receive module. The transmit module may be the first transmit module shown in FIG. 5 or FIG. 9, and the receive module may be the first receive module shown in FIG. 10 or FIG. 12.

The communication system 1700 and the communication system 1800 may be communication system architectures shown in FIG. 1 to FIG. 3A, FIG. 4, or FIG. 13 to FIG. 15A, FIG. 15B, and FIG. 15C, and have same beneficial effect. Details are not described herein again.

As shown in FIG. 19, an embodiment of this application further provides a communication device 1900. The communication device 1900 includes a processor 1901, a communication interface 1902, a memory 1903, and a bus 1904. The processor 1901 may include a CPU, or at least one of a CPU, a GPU, an NPU, and another type of processor. The processor 1901, the communication interface 1902, and the memory 1903 are connected to each other through the bus 1904. In this embodiment of this application, the processor 1901 is configured to control and manage an action of the communication device 1900. For example, the processor 1901 is configured to perform the steps 401 to 406 in FIG. 4 and/or another process of a technology described in this specification. The communication interface 1902 is configured to support communication of the communication device 1900. The memory 1903 is configured to store program code and data of the communication device 1900.

The processor 1901 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The bus 1904 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of indication, the bus is indicated by only one thick line in FIG. 19, but this does not indicate that there is only one bus or one type of bus.

In another embodiment of this application, a computer-readable storage medium is further provided. The computer-readable storage medium stores computer-executable instructions. When at least one processor of a device executes the computer-executable instructions, the device performs the information transmission method described in the foregoing embodiment.

In another embodiment of this application, a computer program product is further provided. The computer program product includes computer-executable instructions, and the computer-executable instructions are stored in a computer-readable storage medium. At least one processor of a device may read the computer-executable instructions from the computer-readable storage medium, and the at least one processor executes the computer-executable instructions, so that the device performs the information transmission method described in the foregoing embodiment.

In another embodiment of this application, a chip system is further provided. The chip system includes at least one processor and an interface. The interface is configured to receive data and/or a signal. The at least one processor is configured to support implementation of the information transmission method described in the foregoing embodiment. In a possible design, the chip system further includes a memory. The memory is configured to store program instructions and data that are necessary for a computer device. The chip system may include a chip, or may include a chip and another discrete component.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed operating process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in form of hardware, or may be implemented in form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the current technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. An information transmission method, comprising:
receiving, by a first node, input data, wherein the input data is first data or a first data signal, the first data signal is obtained by encoding a first flit, and the first flit is obtained by decomposing the first data; and
sending, by the first node, the first data signal to a second node based on a preset time interval, wherein the preset time interval is determined based on a transmission distance between the first node and the second node.

2. The method according to claim 1, wherein the method further comprises:
sending, by the first node, first control information to the second node based on the preset time interval, wherein a sending priority of the first control information is higher than that of the first data signal.

3. The method according to claim 2, wherein the first control information comprises at least one of a first repetition code, a first flow control code, a first parity check code, and a first mode code, wherein
the first repetition code indicates that a plurality of first data signals with same content are consecutively sent;
the first flow control code indicates whether the first node is allowed to receive a new data signal;
the first parity check code indicates that sending of the first data is completed; and
the first mode code is used to control switching of an operating mode of the first node.

4. The method according to any one of claims 1 to 3, wherein the method further comprises:
receiving, by the first node, a second data signal sent by the second node, wherein the second data signal is obtained by encoding a second flit, and the second flit is obtained by decomposing second data; and
outputting, by the first node, the second data signal.

5. The method according to claim 4, wherein the method further comprises:
receiving, by the first node, second control information sent by the second node, wherein a sending priority of the second control information is higher than that of the second data signal.

6. The method according to claim 5, wherein the second control information comprises at least one of a second repetition code, a second flow control code, a second parity check code, and a second mode code, wherein
the second repetition code indicates that a plurality of second data signals with same content are consecutively sent;
the second flow control code indicates whether the second node is allowed to receive a new data signal;
the second parity check code indicates that sending of the second data is completed; and
the second mode code is used to control switching of an operating mode of the second node.

7. The method according to claim 6, wherein the first node comprises a transmit module and a receive module, the receive module is configured to send the second flow control code to the transmit module, and the transmit module is configured to determine, based on the second flow control code, whether to continue to send the first data signal to the second node.

8. The method according to any one of claims 4 to 7, wherein outputting, by the first node, the second data signal comprises:
determining, by the first node, whether the second data signal within a preset quantity of receiving times is a data signal obtained based on the second data; and
if the second data signal within the preset quantity of receiving times is the data signal obtained based on the second data, outputting, by the first node, the second data signal.

9. The method according to any one of claims 4 to 8, wherein outputting, by the first node, the second data signal comprises:
parsing and coupling, by the first node, the second data signal to obtain output data; and
outputting, by the first node, the output data.

10. The method according to any one of claims 4 to 9, wherein a transmission channel used by the first node to send the first data signal is a first communication channel, a transmission channel used by the first node to receive the second data signal is a second communication channel, and the first communication channel and the second communication channel are different transmission channels.

11. The method according to any one of claims 1 to 10, wherein the method further comprises:
when the input data is the first data, decomposing, by the first node, the first data into the first flit; and
encoding, by the first node, the first flit into the first data signal.

12. A communication node, comprising:
a transmit module, configured to receive input data, wherein the input data is first data or a first data signal, the first data signal is obtained by encoding a first flit, and the first flit is obtained by decomposing the first data; and
the transmit module is further configured to send the first data signal to a second node based on a preset time interval, wherein the preset time interval is determined based on a transmission distance between the communication node and the second node.

13. The node according to claim 12, wherein the transmit module is further configured to send first control information to the second node based on the preset time interval, wherein a sending priority of the first control information is higher than that of the first data signal.

14. The node according to claim 13, wherein the first control information comprises at least one of a first repetition code, a first flow control code, a first parity check code, and a first mode code, wherein
the first repetition code indicates that a plurality of first data signals with same content are consecutively sent;
the first flow control code indicates whether the first node is allowed to receive a new data signal;
the first parity check code indicates that sending of the first data is completed; and
the first mode code is used to control switching of an operating mode of the first node.

15. The node according to any one of claims 12 to 14, wherein the node further comprises:
a receive module, configured to receive a second data signal sent by the second node, wherein the second data signal is obtained by encoding a second flit, and the second flit is obtained by decomposing second data; and
the receive module is further configured to output the second data signal.

16. The node according to claim 15, wherein the receive module is further configured to receive second control information sent by the second node, wherein a sending priority of the second control information is higher than that of the second data signal.

17. The node according to claim 16, wherein the second control information comprises at least one of a second repetition code, a second flow control code, a second parity check code, and a second mode code, wherein
the second repetition code indicates that a plurality of second data signals with same content are consecutively sent;
the second flow control code indicates whether the second node is allowed to receive a new data signal;
the second parity check code indicates that sending of the second data is completed; and
the second mode code is used to control switching of an operating mode of the second node.

18. The node according to claim 17, wherein the receive module is configured to send the second flow control code to the transmit module, and the transmit module is configured to determine, based on the second flow control code, whether to continue to send the first data signal to the second node.

19. The node according to any one of claims 15 to 18, wherein the receive module is specifically configured to determine whether the second data signal within a preset quantity of receiving times is a data signal obtained based on the second data; and the receive module is further specifically configured to: if the second data signal within the preset quantity of receiving times is the data signal obtained based on the second data, output the second data signal.

20. The node according to any one of claims 15 to 19, wherein the receive module is specifically configured to parse and couple the second data signal to obtain output data, and the receive module is further configured to output the output data.

21. The node according to any one of claims 15 to 20, wherein a transmission channel used by the transmit module to send the first data signal is a first communication channel, a transmission channel used by the receive module to receive the second data signal is a second communication channel, and the first communication channel and the second communication channel are different transmission channels.

22. The node according to any one of claims 12 to 21, wherein the transmit module is further configured to: when the input data is the first data, decompose the first data into the first flit; and the transmit module is further configured to encode the first flit into the first data signal.

23. A communication device, comprising a processor, wherein computer-executable instructions are run on the processor, and when the computer-executable instructions are executed by the processor, the processor performs the method according to any one of claims 1 to 11.

24. A communication system, comprising at least two communication nodes, wherein the at least two communication nodes are configured to perform the method according to any one of claims 1 to 11.

25. A computer-readable storage medium, wherein the computer-readable storage medium stores a computer program, and when the computer program is executed by a processor, the method according to any one of claims 1 to 11 is implemented.
